# EUROPEAN PATENT APPLICATION

(11) **EP 4 576 372 A1**
(43) Date of publication of application: **25.06.2025**
(21) Application number: 24189094.6
(22) Date of filing: 17.07.2024
(51) Int. Cl.: H01M 50/30

(54) **RECHARGEABLE BATTERY, RECHARGEABLE BATTERY PACK AND METHOD OF MANUFACTURING CAP PLATE OF RECHARGEABLE BATTERY**

(30) Priority: 21.12.2023 KR 20230188684
(71) Applicant: SAMSUNG SDI CO., LTD., Giheung-gu Yongin-si, Gyeonggi-do 17084 (KR)
(72) Inventor: KIM, Sanghun, 17084 Yongin-si (KR); LEE, Chiyoung, 17084 Yongin-si (KR); LEE, Byungmin, 17084 Yongin-si (KR); LIM, Hyunyoung, 17084 Yongin-si (KR)
(74) Representative: Marks & Clerk LLP

(57) **Abstract**

A rechargeable battery includes: an electrode assembly including an electrode; a case to accommodate the electrode assembly; a cap plate to seal an open area of the case; and one or more terminals electrically connected to the electrode, and coupled to the cap plate. The cap plate includes: a vent to expel gas generated from inside a cell outward; and a venting guide wall surrounding the vent, and protruding outward from a surface of the cap plate at a peripheral portion of the vent.

## Description

### BACKGROUND

### 1. Field

Aspects of embodiments of the present disclosure relate to a rechargeable battery, a rechargeable battery pack including the same, and a method of manufacturing a cap plate of a rechargeable battery.

### 2. Description of the Related Art

Unlike primary batteries that are not designed to be charged/recharged, secondary (or rechargeable) batteries are batteries that are designed to be discharged and recharged. Low-capacity secondary batteries are used in portable, small electronic devices, such as smart phones, feature phones, notebook computers, digital cameras, and camcorders. Large-capacity secondary batteries are widely used as power sources for driving motors in hybrid vehicles and electric vehicles, and for storing power (e.g., home and/or utility scale power storage). A secondary battery generally includes an electrode assembly composed of a positive electrode and a negative electrode, a case accommodating the electrode assembly, and electrode terminals connected to the electrode assembly.

The above information disclosed in this Background section is for enhancement of understanding of the background of the present disclosure, and therefore, it may contain information that does not constitute prior art.

### SUMMARY

If a thermal runaway or a thermal event occurs in a particular rechargeable battery cell that causes the internal pressure of the cell to exceed a critical range, a jet, such as a flame or gas, may be ejected through a vent. In this case, in response to the rapid spread of a hot jet over the surrounding area, heat may spread to the neighboring cells. As a result, the neighboring cells may also experience a thermal runaway or a thermal event.

Embodiments of the present disclosure may be directed to a rechargeable battery including a venting guide wall to prevent or substantially prevent a hot jet from spreading to the neighboring cells, or delay the time of the spread. Embodiments of the present disclosure may be directed to a rechargeable battery pack including the rechargeable battery, and a method of manufacturing a cap plate including a venting guide wall.

However, the present disclosure is not limited to the above aspects and features, and the above and other aspects and features of the present disclosure will be described in, or will be apparent from, the following description of some embodiments of the present disclosure.

According to one or more embodiments of the present disclosure, a rechargeable battery includes: an electrode assembly including an electrode; a case configured to include or accommodate the electrode assembly; a cap plate configured to seal an open area of the case; and one or more terminals electrically connected to the electrode, and coupled to the cap plate. The cap plate includes: a vent configured to expel gas generated from inside a cell outward or to allow such gas to escape outward; and a venting guide wall surrounding the vent, and protruding outward from a surface of the cap plate at a peripheral portion of the vent.

In an embodiment, the venting guide wall may be integrated with the cap plate.

In an embodiment, a height from a lower surface of the cap plate to an upper surface of the venting guide wall may be higher than a thickness of any portion of the cap plate excluding the venting guide wall.

In an embodiment, the vent may have or may be a venting hole as a through-hole, and the venting guide wall may surround the venting hole.

In an embodiment, the vent may have or may be a concave venting recess, and the venting guide wall may surround the concave venting recess.

In an embodiment, a height from a lower surface of the cap plate to an upper surface of the concave venting recess may be lower than a thickness of any portion of the cap plate excluding the concave venting recess.

In an embodiment, the concave venting recess may include a notch configured to rupture at least a portion of the concave venting recess if a thermal event occurs.

In an embodiment, the venting guide wall and the concave venting recess may be integrated with the cap plate.

In an embodiment, a height from a lower surface of the cap plate to an upper surface of the venting guide wall may be lower than a height from a lower surface of the cap plate to an upper surface of each of the one or more terminals.

In an embodiment, a rechargeable battery pack may include the rechargeable battery.

According to one or more embodiments of the present disclosure, a method of manufacturing a cap plate of a rechargeable battery, includes: molding a cap plate raw material using a first mold having a recess to form a convex portion on an upper surface of the cap plate raw material; placing the molded cap plate raw material on one side of a second mold having a through-hole smaller than the convex portion, so that the through-hole of the second mold overlaps with a central portion of the convex portion; and forming a venting hole and a venting guide wall surrounding the venting hole in the convex portion by applying pressure in a direction from a position of the molded cap plate raw material to the through-hole of the second mold using a punch die smaller than the convex portion. The rechargeable battery may be the rechargeable battery as defined above.

In an embodiment, the first mold and the second mold may be same molds, the second mold may have a recess, and the through-hole of the second mold may be a through-hole smaller than the recess and located at a central portion of the recess.

According to some embodiments of the present disclosure, the venting guide wall may guide a jet from the vent to be ejected in a direction in which the venting guide wall protrudes, thereby preventing or substantially preventing a flame, heat, or the like from spreading to neighboring cells, or delaying the time of the spread. As a result, a thermal event that may occur in the neighboring cells due to the heat spread may be prevented or substantially prevented, or the time of an occurrence of the thermal event may be delayed.

According to some embodiments of the present disclosure, by changing the structure of a mold used in the molding of the cap plate, the cap plate provided with the venting guide wall may be manufactured using the mold without an additional process (e.g., using the same or substantially the same manufacturing process). Accordingly, an improved cap plate may be manufactured in a manufacturing time that is the same as, similar to, or less than the manufacturing time of a comparative manufacturing process.

At least some of the above and other features of the invention are set out in the claims.

However, the aspects and features of the present disclosure are not limited to those described above, and the above and other aspects and features will be more clearly understood by those having ordinary skill in the art from the detailed description with reference to the figures, and in part, may be apparent therefrom, or may be learned by practicing one or more of the presented embodiments of the present disclosure.

### BRIEF DESCRIPTION OF THE DRAWINGS

The above and other aspects and features of the present disclosure will be more clearly understood from the following detailed description of the illustrative, nonlimiting embodiments with reference to the accompanying drawings, in which:
FIG. 1 illustrates a perspective view of an example of a rechargeable battery according to one or more embodiments of the present disclosure;
FIG. 2 illustrates an exploded perspective view of an example of a cap assembly according to one or more embodiments of the present disclosure;
FIG. 3 illustrates an example of a cap assembly without a venting guide wall;
FIG. 4 illustrates an example of a cap assembly according to one or more embodiments of the present disclosure;
FIG. 5 illustrates an example of a method of manufacturing a cap plate according to one or more embodiments of the present disclosure;
FIG. 6 illustrates an example of the cap plate manufactured by the manufacturing method of FIG. 5;
FIG. 7 illustrates an example of a cap assembly according to one or more embodiments of the present disclosure;
FIG. 8 illustrates an example of a cap assembly according to one or more embodiments of the present disclosure;
FIG. 9 illustrates an example of a method of manufacturing a cap plate according to one or more embodiments of the present disclosure;
FIG. 10 illustrates an example of the cap plate manufactured by the manufacturing method of FIG. 9;
FIG. 11 illustrates an example of a cap assembly according to one or more embodiments of the present disclosure;
FIG. 12 illustrates a flowchart showing a method of manufacturing a cap plate of a rechargeable battery according to one or more embodiments of the present disclosure;
FIG. 13 illustrates a flowchart showing a method of manufacturing a cap plate of a rechargeable battery according to one or more embodiments of the present disclosure;
FIG. 14 illustrates a perspective view of an example of a battery module according to one or more embodiments of the present disclosure;
FIG. 15 illustrates a perspective view of an example of a battery pack according to one or more embodiments of the present disclosure;
FIG. 16 illustrates a perspective view of an example of a battery pack according to one or more embodiments of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

Any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

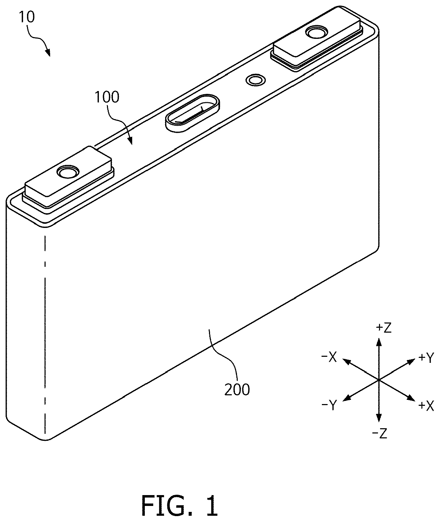

FIG. 1 illustrates a perspective view of an example of a rechargeable battery 10 according to one or more embodiments of the present disclosure. Hereinafter, the rechargeable battery 10 may also be referred to as a secondary battery 10.

Referring to FIG. 1, the secondary battery 10 according to one or more embodiments of the present disclosure may include at least one electrode assembly that is wound with a separator as an insulator between a positive electrode and a negative electrode, a case 200 in which the electrode assembly is received (e.g., accommodated) therein, and a cap assembly 100 connected to (e.g., coupled to or attached to) an opening of the case 200.

The secondary battery 10 according to one or more embodiments will now be described in more detail with reference to FIG. 1 as an example of a prismatic lithium ion secondary battery. However, the present disclosure is not limited thereto, and the secondary battery 10 may be other suitable kinds of batteries, such as lithium polymer batteries and/or cylindrical batteries.

Each of the positive electrode and the negative electrode may include a current collector including (e.g., made of) a thin metal foil having a coated portion on which an active material is coated, and an uncoated portion on which an active material is not coated.

The positive electrode and the negative electrode may be wound after interposing the separator, which is an insulator, therebetween. However, the present disclosure is not limited thereto, and the electrode assembly may have a structure in which a positive electrode and a negative electrode, each including (e.g., made of) a plurality of sheets, are alternately stacked with a separator interposed therebetween. As another example, an electrode assembly may not include a separator. In other words, the electrode assembly may have any suitable configuration including the electrodes.

The case 200 may form the overall outer appearance of the secondary battery 10, and may include (e.g., may be made of) a conductive metal, such as aluminum, an aluminum alloy, or a nickel-plated steel. In addition, the case 200 may provide a space in which the electrode assembly is accommodated.

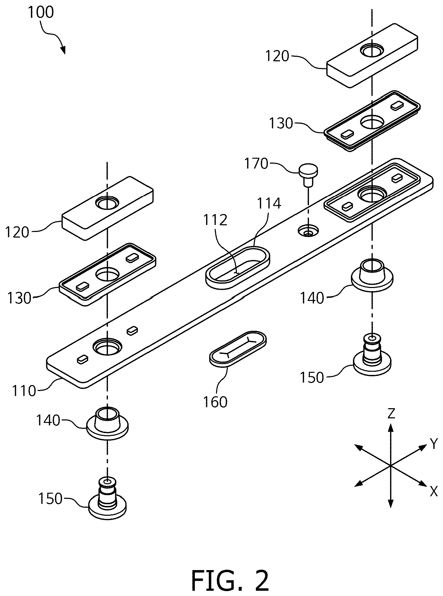

The cap assembly 100 may seal an open area of the case 200. The cap assembly 100 may include a cap plate having the shape of a thin plate covering the open area of the case 200, and each of the case 200 and the cap plate may include (e.g., may be made of) a conductive material. Electrode terminals (e.g., positive and negative electrode terminals), each electrically connected to a corresponding electrode (e.g., the positive electrode or the negative electrode), may be disposed to extend through and protrude from the cap plate. The electrode terminals may be threaded to be fixed to the cap plate using a nut, may have a rivet structure to be riveted to the cap plate, or may be welded to the cap plate, but the present disclosure is not limited thereto. The configuration of the cap assembly 100 according to one or more embodiments of the present disclosure will be described in more detail below with reference to FIG. 2.

In some embodiments, a plurality of rechargeable batteries 10 may be stacked on each other, thereby providing a battery pack. The battery pack may be used in any suitable device in which high capacity and high power are desired or used. For example, battery packs may be used in laptops, smartphones, electric vehicles, and the like.

The rechargeable battery 10 may be a lithium (Li) rechargeable battery, a sodium (Na) rechargeable battery, or the like. However, the present disclosure is not limited thereto, and the rechargeable battery 10 may include any suitable kind of battery capable of repeatedly providing electricity by being charged and discharged. In some embodiments in which the rechargeable battery 10 is a Li rechargeable battery, the rechargeable battery 10 may be used in an electric vehicle (EV) due to having superior lifetime and superior high rate characteristics. For example, the rechargeable battery 10 may be used in a hybrid vehicle, such as a plug-in hybrid electric vehicle (PHEV). In addition, the Li rechargeable battery may be used in a field in which a large amount of power storage is desired or used. For example, the Li rechargeable battery may be used in electric bicycles, power tools, or the like.

FIG. 2 illustrates an exploded perspective view of an example of the cap assembly 100 according to one or more embodiments of the present disclosure.

Referring to FIG. 2, the cap assembly 100 may include a cap plate 110, terminal plates 120, upper insulating members 130, gaskets 140, and rivet terminals 150.

The cap plate 110 may be a conductive metal member having a thin plate-shaped body. In some embodiments, the cap plate 110 may include a vent, a venting guide wall 114, terminal holes, and an electrolyte inlet.

The vent may eject gas from inside a battery cell, if the internal pressure of the battery cell exceeds a critical range due to an occurrence of a thermal event or the like. In response to materials, such as gas and flames, escaping from inside the battery cell through the vent, the internal pressure of the battery cell may be reduced.

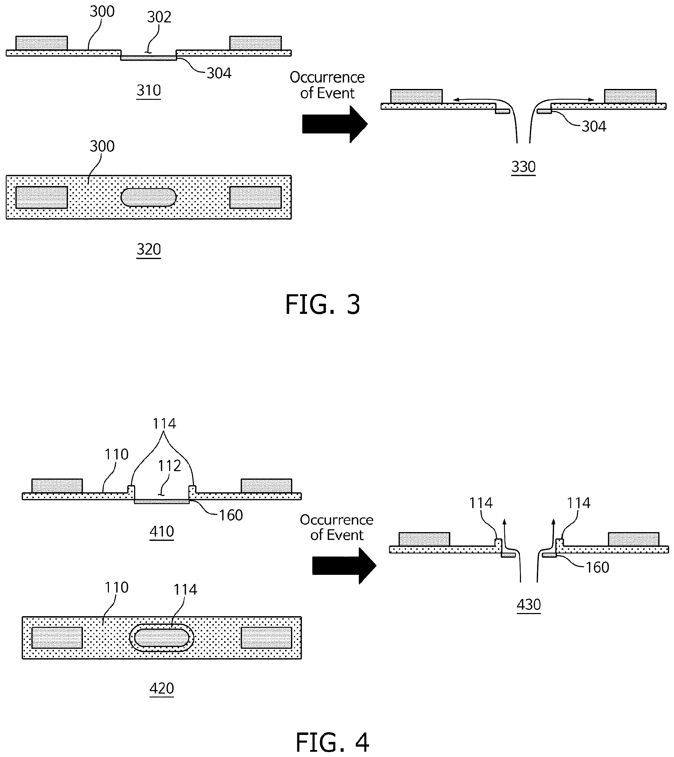

In some embodiments, referring to FIG. 2, the vent may be a venting hole 112 having the shape of a through-hole provided in the cap plate 110. For example, referring to FIG. 2, the venting hole 112 may be an oblong-shaped through-hole provided in the central portion of the cap plate 110. However, the present disclosure is not limited thereto, and the venting hole 112 may be a through-hole having any suitable shape. In the present embodiment, the venting hole 112 may be sealed using a vent plate 160. If the internal pressure of the battery cell exceeds a critical range, the vent plate 160 may be ruptured or dislodged, thereby allowing gas to escape through the opened venting hole 112. As a result, the internal pressure of the battery cell may be reduced. This will be described in more detail below with reference to FIGS. 4 through 7.

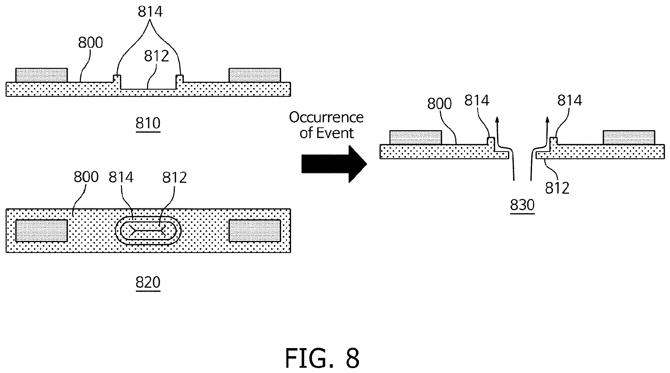

As another example, the vent may be a venting recess having a concave shape. For example, the venting recess may have a shape in which an upper surface portion of a central portion of the cap plate is downwardly recessed. If the internal pressure of the battery cell exceeds a critical range, at least a portion of the venting recess may be ruptured to form a through-hole, thereby allowing gas to escape. As a result, the internal pressure of the battery cell may be reduced. In the present embodiment, a notch may be provided in the venting recess, such that at least a portion of the venting recess may be ruptured if the internal pressure of the battery cell exceeds a critical range. This will be described in more detail below with reference to FIGS. 8 through 11.

The venting guide wall 114 may be a wall provided around a peripheral portion of the vent. The venting guide wall 114 may protrude from a surface of a peripheral portion of the venting guide wall 114 (e.g., a top surface of the cap plate 110 or a top surface of the venting recess) in an outward direction (e.g., an upward direction or the +Z direction). The venting guide wall 114 may be seamlessly integrated with the body of the cap plate. The venting guide wall 114 may guide a jet from the vent to be ejected in a direction in which the venting guide wall 114 protrudes, thereby preventing or substantially preventing a flame, heat, or the like from spreading to the neighboring cells, or delaying the time of the spread. As a result, the thermal event that may occur in the neighboring cells due to the heat spread may be prevented or substantially prevented, or the time of the occurrence of the thermal event may be delayed.

The terminal holes may include a first terminal hole and a second terminal hole. A negative electrode terminal (or a positive electrode terminal) 150 may be provided in the first terminal hole to be electrically connected to the negative electrode (or positive electrode) of the electrode assembly in the case 200. A positive electrode terminal (or negative electrode terminal) 150 may be provided in the second terminal hole to be electrically connected to the positive electrode (or negative electrode) of the electrode assembly in the case 200.

The terminal plates 120 may be disposed above the terminal holes, respectively. The upper insulating members 130 may be disposed between the terminal plates 120 and the terminal holes, respectively, to electrically insulate the terminal plates 120 from the cap plate 110.

The rivet terminals 150 may be disposed below the terminal holes, respectively. The rivet terminals 150 may be electrically connected to the electrode assembly. The gaskets 140 may be disposed between the rivet terminals 150 and the cap plate 110, respectively, to electrically insulate the rivet terminals 150 from the cap plate 110.

While the terminals having a rivet structure are illustrated in FIG. 2 and described as an example of the terminals, the present disclosure is not limited thereto, and the terminals may have any suitable structure, for example, such as a screw structure. Hereinafter, the terminals may refer to the terminals (e.g., the rivet terminals) 150 electrically connected to the electrode assembly, and/or the terminal plates 120 electrically connected to the terminals.

The electrolyte inlet may be a through-hole provided in the cap plate 110, and may allow an electrolyte to be injected therethrough into the case 200 after the cap plate 110 is connected to (e.g., coupled to or attached to) the open area of the case 200. The electrolyte inlet may be hermetically closed using a hermetic closing member 170 after the electrolyte is injected into the case 200.

In some embodiments of the present disclosure, the cap plate 110 may refer to a thin plate-shaped body of the cap plate 110, except for the vent, the venting guide wall 114, the terminal holes, and the electrolyte inlet. In addition, in the following description of the cap plate 110 or a method of manufacturing the cap plate 110 according to some embodiments of the present disclosure, the illustration or description of the terminal holes, the electrolyte inlet, and the like, except for the vent and the venting guide wall 114, may be omitted. However, this is for convenience, and the omitted configurations are not intended to be excluded in some embodiments.

Hereinafter, with respect to the cap plate 110 or the method of manufacturing the cap plate 110 according to some embodiments of the present disclosure, a front view may refer to a view illustrating a particular component, a manufacturing apparatus, or the like that is viewed in the X-axis direction (+X direction or -X direction) in FIGS. 1 and 2, and a top view may refer to a view illustrating a particular component, a manufacturing apparatus, or the like that is viewed in the Z-axis direction (+Z direction) in FIGS. 1 and 2.

FIG. 3 illustrates an example of a cap assembly without a venting guide wall. In FIG. 3, a first illustration 310 and a second illustration 320 are examples of a front view and a plan view, respectively, of the cap assembly without a venting guide wall.

The cap assembly without a venting guide wall may include a venting hole 302 having the shape of a through-hole in a cap plate 300, and the venting hole 302 may be hermetically closed with a vent plate 304.

A third illustration 330 shows an example in which a jet is ejected in response to a thermal event occurring in a battery cell including the cap assembly without a venting guide wall. If the internal pressure of a certain cell exceeds a critical range in response to a thermal event occurring in the cell, the vent plate 304 may be ruptured or dislodged, thereby allowing a jet, such as a flame or gas, to be ejected through the venting hole 302. If no venting guide wall is provided, in response to the rapid spread of the hot jet over the surrounding area, heat may spread to the neighboring cells. As a result, a thermal event may also occur in the neighboring cells.

FIG. 4 illustrates an example of a cap assembly according to one or more embodiments of the present disclosure. In FIG. 4, a first illustration 410 and a second illustration 420 illustrate examples of a front view and a plan view, respectively, of the cap assembly including the cap plate 110 provided with a venting guide wall 114.

In the cap assembly according to one or more embodiments of the present disclosure, the venting hole 112 having the shape of a through-hole may be provided in the cap plate 110, and the venting hole 112 may be hermetically closed with the vent plate 160. In addition, the venting guide wall 114 may be provided on the cap plate 110 to surround (e.g., around a periphery of) a peripheral portion of the venting hole 112. In other words, the peripheral portion of the venting hole 112 of the cap plate 110 may be thicker or thickened to form a venting guide wall 114. In some embodiments, the venting guide wall 114 may be provided to be seamlessly integrated with the body of the cap plate 110. In this example, the venting guide wall 114 has a stepped structure from the body of cap plate 110, and the venting guide wall 114 may be made of the same material as that of and seamlessly integrated with the cap plate 110.

A third illustration 430 shows an example in which a jet is ejected in response to a thermal event occurring in a battery cell including the cap assembly provided with the venting guide wall 114. If the internal pressure of a certain cell exceeds a critical range in response to the thermal event occurring in the cell, the vent plate 160 may be ruptured or be dislodged, thereby allowing the jet, such as a flame or gas, to escape through the opened venting hole 112. In this case, the venting guide wall 114 that protrudes upward from the upper surface of the cap plate 110 may guide the jet to be ejected upwards. In some embodiments, the upwardly ejected jet may escape through a flow path and/or an outlet located at an upper position. As a result, a flame, heat, or the like may be prevented or substantially prevented from spreading to the neighboring cells, or the time of the spread may be delayed. Accordingly, the thermal event that may occur in the neighboring cells due to the heat spread may be prevented or substantially prevented, or the time of the occurrence of the thermal event may be delayed.

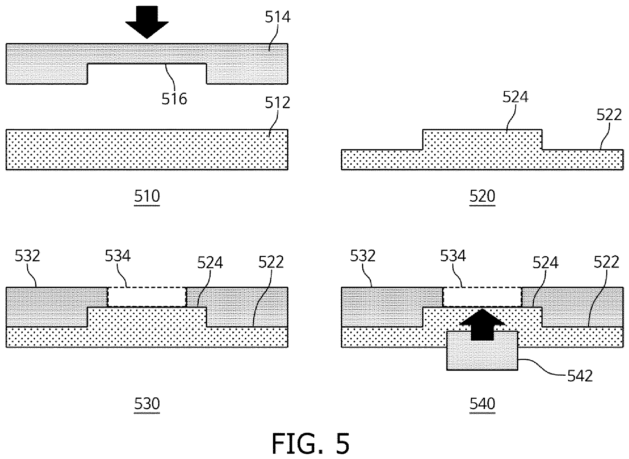

FIG. 5 illustrates an example of a method of manufacturing a cap plate according to one or more embodiments of the present disclosure. For example, a cap plate in which a venting guide wall is seamlessly integrated with the body of the cap plate may be manufactured by a process illustrated in first to fourth illustrations 510, 520, 530, and 540 of FIG. 5.

The first illustration 510 is a front view illustrating an example of molding a cap plate raw material 512 using a first mold 514. The first mold 514 may be a mold having a recess 516. For example, the first mold 514 may be a press mold having the recess 516 shaped by upwardly recessing a portion of a lower surface (e.g., a central portion of the lower surface) of the mold. In some embodiments, the shape of the recess 516 viewed from below the first mold 514 may be oblong, but the present disclosure is not limited thereto. The shape of the recess 516 may be the same as or similar to the shape of a venting hole formed in a subsequent process, but may be larger than the size of the venting hole.

In some embodiments, the cap plate raw material 512 may be a conductive metal (e.g., aluminum (Al) or an Al alloy). The cap plate raw material 512 may be disposed at one side of (e.g., below) the first mold 514. A press apparatus may mold the cap plate raw material 512 by pressing the cap plate raw material 512 using the first mold 514.

The second illustration 520 is a front view showing an example of a molded cap plate raw material 522. In the molded cap plate raw material 522, a convex portion 524 may be formed on an upper surface of a portion pressed by the recess 516 of the first mold 514. The shape of the convex portion 524 viewed from above may be the same as or similar to the shape of the recess 516 viewed from below.

The third illustration 530 is a front view illustrating an example in which the molded cap plate raw material 522 is provided on one side of a second mold 532. In some embodiments, the second mold 532 may include a through-hole 534 smaller than the convex portion 524 of the molded cap plate raw material 522. In some embodiments, the shape of the through-hole 534 when viewed from above or below the second mold 532 may be oblong, but the present disclosure is not limited thereto. The shape and the size of the through-hole 534 when viewed from above or below the second mold 532 may be the same as or similar to the shape and the size of the venting hole to be formed in a subsequent process when viewed from above or below. The molded cap plate raw material 522 may be disposed on one side of (e.g., below) the second mold 532, such that the through-hole 534 of the second mold 532 overlaps with a central portion of the convex portion 524 of the molded cap plate raw material 522.

The fourth illustration 540 is a front view showing an example of forming the venting hole and a venting guide wall surrounding (e.g., around a periphery of) the venting hole in the convex portion 524 of the molded cap plate raw material 522 using a punch die 542. In some embodiments, the shape of the punch die 542 viewed from above or below may be the same as or similar to the shape of the convex portion 524 of the cap plate raw material 522 viewed from above, and the size of the punch die 542 may be smaller than the size of the convex portion 524. For example, the shape and the size of the punch die 542 when viewed from above or below may be the same as or similar to the shape and the size of the venting hole to be formed in a subsequent process or the through-hole 534 of the second mold 532 when viewed from above or below. In some embodiments, the venting hole and the venting guide wall surrounding (e.g., around a periphery of) the venting hole may be formed in the convex portion 524 by applying pressure in a direction from the position of the cap plate raw material 522 to the through-hole 534 of the second mold 532 using the punch die 542. A portion of the convex portion 524 punched by the punch die 542 may form the venting hole, and the remaining portion of the convex portion 524 may form the venting guide wall surrounding (e.g., around a periphery of) the venting hole. As a result, a cap plate in which a portion thereof surrounding (e.g., around a periphery of) the peripheral portion of the venting hole is thickened (e.g., the venting guide wall is seamlessly integrated with the body of the cap plate) may be manufactured.

In some embodiments as described above, by changing the structure of the mold used in the molding of the cap plate, the cap plate provided with the venting guide wall may be manufactured without an additional process (e.g., using the same or substantially the same process). Accordingly, an improved cap plate may be manufactured in a manufacturing time that is the same as, similar to, or less than the manufacturing time of a comparative process.

In other embodiments, the cap plate may be manufactured using a single mold. For example, the cap plate in which the venting guide wall is seamlessly integrated with the cap plate body may be manufactured by placing the cap plate raw material 512 on one side of a mold including the recess and the venting hole smaller than the recess in the central portion of the recess, and then sequentially or concurrently (e.g., simultaneously or substantially simultaneously) performing a process of pressing the cap plate raw material 512 and a process of forming the venting hole and the venting guide wall surrounding (e.g., around a periphery of) the venting hole using the punch die 542. Accordingly, the manufacturing process may be simplified, and the manufacturing time may be further reduced.

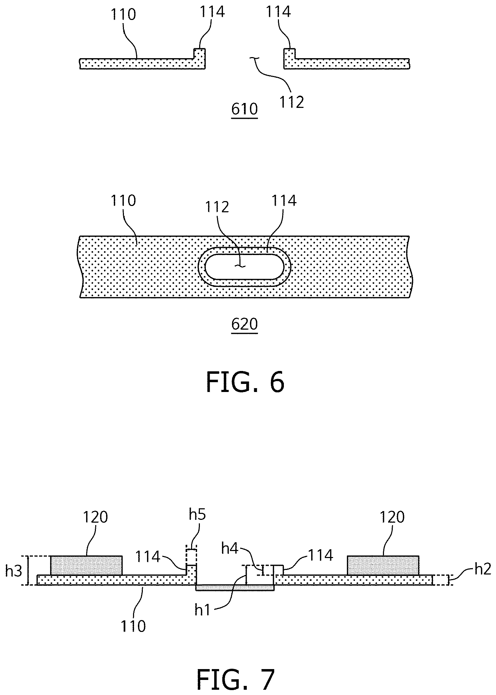

FIG. 6 illustrates an example of the cap plate 110 manufactured by the manufacturing method of FIG. 5.

In FIG. 6, a first illustration 610 and a second illustration 620 illustrate examples of a front view and a plan view, respectively, of the cap plate 110 having the venting guide wall 114 that is manufactured by the manufacturing method of FIG. 5.

Referring to the first illustration 610 and the second illustration 620, the venting hole 112 having the shape of a through-hole may be provided in the cap plate 110. For example, the venting hole 112 may be an oblong through-hole provided in the central portion of the cap plate 110, but the present disclosure is not limited thereto. The venting hole 112 may be a through-hole having any suitable shape.

In addition, the venting guide wall 114 surrounding (e.g., around a periphery of) the peripheral portion of the venting hole 112 may be provided on the cap plate 110. For example, the venting guide wall 114 may be an oblong sidewall, but the present disclosure is not limited thereto. The venting guide wall 114 may be a sidewall having any suitable shape surrounding (e.g., around a periphery of) the venting hole 112. The venting guide wall 114 may be seamlessly integrated with the body of the cap plate 110. In other words, the peripheral portion of the venting hole 112 of the cap plate 110 may be thickened, and the thickened portion may form the venting guide wall 114.

FIG. 7 illustrates an example of a cap assembly according to one or more embodiments of the present disclosure. In the cap plate 110 including the venting hole and the venting guide wall 114 according to some embodiments of the present disclosure, the specific shape of the venting guide wall 114 may be appropriately designed to minimize or reduce interference with other components, depending on the intended use of the rechargeable battery, depending on the sizes of other configurations, and the like.

In some embodiments, the venting guide wall 114 may be the highest of all the portions of the cap plate 110. For example, the height h1 from the lower surface of the cap plate 110 to the upper surface of the venting guide wall 114 may be higher than the thickness of any portion of the cap plate 110, except for the venting guide wall 114. In other words, the height h1 from the lower surface of the cap plate 110 to the upper surface of the venting guide wall 114 may be higher than the thickness h2 of the body of the cap plate 110 (e.g., the thickness from the lower surface to the upper surface of the cap plate 110).

In some embodiments, the venting guide wall 114 may be designed to be lower than the terminals 120. For example, the height h1 from the lower surface of the cap plate 110 to the upper surface of the venting guide wall 114 may be lower than the height h3 from the lower surface of the cap plate 110 to the upper surface of each of the terminals 120. Thus, the venting guide wall 114 of the cap plate 110 may serve to guide a venting flow path without interfering with the other components of the module/pack.

In some embodiments, each of the height of the venting guide wall 114 protruding outward from the surface of the peripheral portion of the venting guide wall 114 and the thickness of the venting guide wall 114 may be the same as or similar to the thickness h2 of the body of the cap plate 110. As an example, the height h4 from the upper surface of the cap plate 110 to the upper surface of the venting guide wall 114 may range from about 1.5 mm to about 3.5 mm, and each of the thickness h5 of the venting guide wall 114 and the height h2 of the cap plate 110 may range from 1.5 mm to 3 mm, but the present disclosure is not limited thereto.

FIG. 8 illustrates an example of a cap assembly according to one or more embodiments of the present disclosure.

In FIG. 8, a first illustration 810 and a second illustration 820 show examples of a front view and a plan view, respectively, of a cap assembly including a venting recess 812 and a venting guide wall 814 according to some embodiments of the present disclosure.

The cap assembly according to one or more embodiments of the present disclosure may be provided with a concave venting recess 812 in a cap plate 800. For example, the venting recess 812 may be shaped so that the upper surface of a central portion of the cap plate 800 is concavely recessed downward. In other words, a peripheral portion of the venting recess 812 of the cap plate 800 may be thickened. In some embodiments, the venting recess 812 and the venting guide wall 814 may be seamlessly integrated with the body of the cap plate 800. In this example, there is illustrated a stepped structure of the body, the venting recess 812, and the venting guide wall 814 of the cap plate 800, and the venting guide wall 814 may be made of the same material as that of and seamlessly integrated with the cap plate 800.

A third illustration 830 shows an example in which a jet is ejected in response to a thermal event occurring in a battery cell including the cap assembly provided with the venting recess 812 and the venting guide wall 814. If the internal pressure of a certain cell exceeds a critical range in response to a thermal event occurring in the cell, at least a portion of the venting recess 812 (e.g., at least a portion of a notch provided in the venting recess 812) may be ruptured, thereby allowing a jet, such as a flame or gas, to be ejected through the ruptured portion. In this case, the venting guide wall 814 that protrudes upward from the upper surface of the cap plate 800 may guide the jet to be ejected upwards. In some embodiments, the upwardly ejected jet may escape through a flow path and/or an outlet located at an upper position. As a result, a flame, heat, or the like may be prevented or substantially prevented from spreading to the neighboring cells, or the time of the spread may be delayed. Accordingly, the thermal event that may occur in the neighboring cells due to the heat spread may be prevented or substantially prevented, or the time of the occurrence of the thermal event may be delayed.

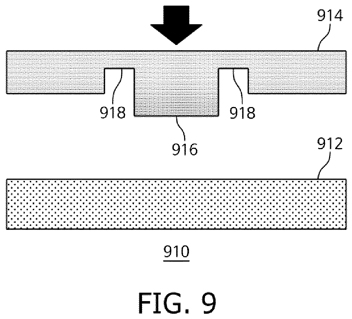

FIG. 9 illustrates an example of a method of manufacturing a cap plate according to one or more embodiments of the present disclosure. For example, a cap plate in which a venting recess and a venting guide wall are seamlessly integrated with a body of the cap plate may be manufactured by a process illustrated in a first illustration 910 of FIG. 9.

The first illustration 910 shows a front view illustrating an example of forming a venting recess and a venting guide wall by molding a cap plate raw material 912 using a third mold 914. The third mold 914 may include a convex portion 916 at (e.g., in or on) a central portion, and a recess 918 surrounding (e.g., around a periphery of) the convex portion. For example, the third mold 914 may be a press mold provided with the convex portion 916 shaped by downwardly protruding a central portion of the lower surface and the recess 918 shaped by upwardly recessing the lower surface to surround (e.g., around a periphery of) the convex portion 916. In some embodiments, the shape of the convex portion 916 when viewed from below the third mold 914 may be oblong, but the present disclosure is not limited thereto. The shape and the size of the convex portion 916 when viewed from below the third mold 914 may be the same as or similar to the shape and the size of the venting recess to be formed in a subsequent process when viewed from above or below.

In some embodiments, the cap plate raw material 912 may be a conductive metal (e.g., Al or an Al alloy). The cap plate raw material 912 may be disposed at one side of (e.g., below) the third mold 914. A press apparatus may mold the cap plate raw material 912 by pressing the cap plate raw material 912 using the third mold 914.

A recess (e.g., corresponding to the venting recess) may be provided in the upper surface of a portion of the molded cap plate pressed by the convex portion 916 of the third mold 914, and a convex portion (e.g., corresponding to the venting guide wall) may be formed on the upper surface of a portion pressed by the recess 918 of the third mold 914. In addition, a notch may be formed in the venting recess.

Accordingly, the cap plate including the concave venting recess, and in which the portion surrounding (e.g., around a periphery of) the venting recess is thickened, may be manufactured. In other words, the cap plate in which the venting recess and the venting guide wall surrounding (e.g., around a periphery of) the venting recess are seamlessly integrated with the body of the cap plate may be manufactured.

According to one or more embodiments of the present disclosure, by changing the structure of the mold used in the molding process of the cap plate, the cap plate provided with the venting recess and the venting guide wall may be manufactured without an additional process (e.g., using the same or substantially the same process). Accordingly, an improved cap plate may be manufactured in a manufacturing time that is the same as, similar to, or less than the manufacturing time of a comparative process.

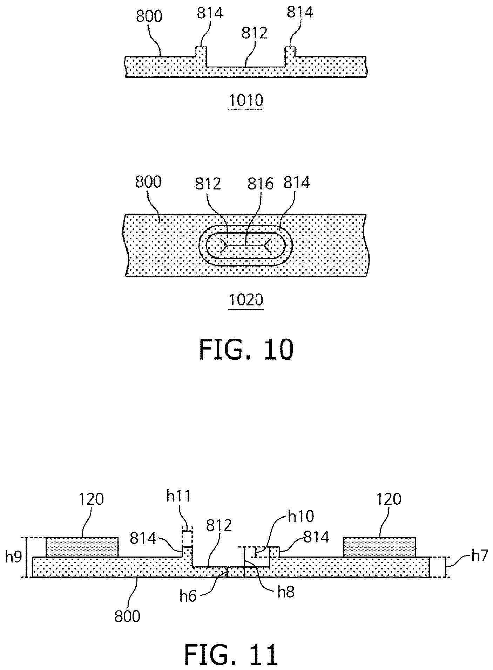

FIG. 10 illustrates an example of the cap plate 800 manufactured by the manufacturing method of FIG. 9. In FIG. 10, a first illustration 1010 and a second illustration 1020 show examples of a front view and a plan view, respectively, of the cap plate 800 manufactured by the manufacturing method of FIG. 9 that includes the venting recess 812 and the venting guide wall 814.

Referring to the first illustration 1010 and the second illustration 1020, the concave venting recess 812 may be provided in the cap plate 800. For example, the venting recess 812 shaped by concavely recessing the upper surface of a central portion of the cap plate 800 may be formed. Referring to FIG. 10, the venting recess 812 may be an oblong recess provided in the central portion of the cap plate 800, but the present disclosure is not limited thereto. The venting recess 812 may be a recess having any suitable shape.

In addition, the venting guide wall 814 surrounding (e.g., around a periphery of) the peripheral portion of the venting recess 812 may be provided on the cap plate 800. For example, the venting guide wall 814 may be an oblong sidewall, but the present disclosure is not limited thereto. The venting guide wall 814 may be a sidewall having any suitable shape surrounding (e.g., around a periphery of) the venting recess 812. In this example, there is illustrated a stepped structure of the body, the venting recess 812, and the venting guide wall 814 of the cap plate 800, and the venting guide wall 814 may be made of the same material as that of and seamlessly integrated with the cap plate 800.

Referring to the second illustration 1020, a notch 816 may be provided in the venting recess 812. The notch 816 may be at least one groove in which the surface of the venting recess 812 is removed or engraved to a suitable thickness (e.g., a predetermined thickness). The notch 816 may have various suitable shapes in which the notch 816 may be ruptured in a case where the internal pressure of a cell exceeds a critical range.

FIG. 11 illustrates an example of a cap assembly according to one or more embodiments of the present disclosure. In the cap plate 800 provided with the venting recess 812 and the venting guide wall 814 according to some embodiments of the present disclosure, the specific shape of the venting recess 812 and the venting guide wall 814 may be appropriately designed to minimize or reduce interference with other components, depending on the intended use of the rechargeable battery, depending on the sizes of other configurations, and the like.

In some embodiments, the venting recess 812 may be the lowest of all portions of the cap plate 800. For example, the thickness h6 of the venting recess 812 (e.g., the height from the lower surface of the cap plate 800 to the upper surface of the venting recess 812) may be the lowest of all portions of the cap plate 800. As an example, the height h6 from the lower surface of the cap plate 800 to the upper surface of the venting recess 812 may be lower than the height h7 of the body of the cap plate 800. Thus, if the internal pressure of a cell exceeds a critical range in response to the occurrence of a thermal event, at least a portion of the venting recess 812 may be easily ruptured.

In some embodiments, the venting wall 814 may be the highest of all portions of the cap plate 800. For example, the height h8 from the lower surface of the cap plate 800 to the upper surface of the venting guide wall 814 may be higher than the thickness of any portion of the cap plate 800, except for the venting guide wall 814. As an example, the height h8 from the lower surface of the cap plate 800 to the upper surface of the venting guide wall 814 may be higher than the thickness h7 of the body of the cap plate 800.

In some embodiments, the venting guide wall 814 may be designed to be lower than the terminals 120. The height h8 from the lower surface of the cap plate 800 to the upper surface of the venting guide wall 814 may be lower than the height h9 from the lower surface of the cap plate 800 to the upper surface of each of the terminals 120. Thus, the venting guide wall 814 of the cap plate 800 may serve to guide a venting flow path without interfering with the other components of the module/pack.

In some embodiments, each of the height h10 of the venting guide wall 814 protruding outward from the surface of a peripheral portion of the venting guide wall 814 and the thickness h11 of the venting guide wall 814 may be the same as or similar to the thickness h7 of the body of the cap plate 800.

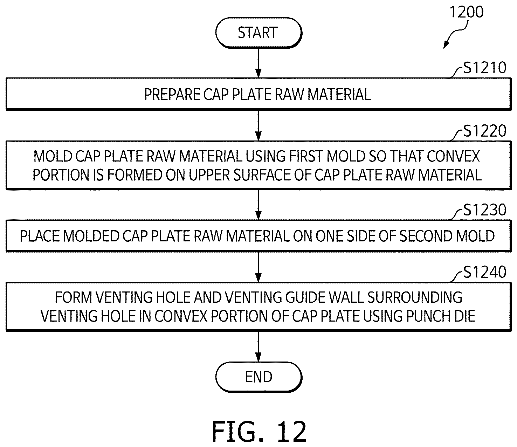

FIG. 12 illustrates a flowchart showing a method 1200 of manufacturing a cap plate of a rechargeable battery according to one or more embodiments of the present disclosure.

Referring to FIG. 12, the method 1200 may start, and a cap plate raw material may be prepared (S1210). In some embodiments, the cap plate raw material may be a conductive metal (e.g., Al, an Al alloy, or steel coated with nickel (Ni)). Thereafter, the cap plate raw material may be disposed on one side of a first mold. The first mold may be a mold including a recess.

Subsequently, the cap plate raw material may be molded using the first mold so that a convex portion is formed on the upper surface of the cap plate raw material (S1220). For example, the first mold may be a press mold, and a press apparatus may press the cap plate raw material using the first mold including the recess. As a result, a convex portion may be formed on the upper surface of the portion of the cap plate raw material pressed by the recess of the first mold.

Thereafter, the molded cap plate raw material may be placed on one side of a second mold (S1230). The second mold may include a through-hole smaller than the convex portion, so that the through-hole of the second mold overlaps with the convex portion of the cap plate raw material. Subsequently, a venting hole and a venting guide wall surrounding (e.g., around a periphery of) the venting hole may be formed in the convex portion of the cap plate using a punch die (S1240), for example, by applying pressure in the direction from the position of the cap plate raw material to the through-hole of the second mold using the punch die smaller than the convex portion of the molded cap plate raw material. A portion of the convex portion punched by the punch die may form the venting hole, and the remaining portion of the convex portion may form the venting guide wall surrounding (e.g., around a periphery of) the venting hole. As a result, a cap plate in which a portion thereof surrounding (e.g., around a periphery of) the peripheral portion of the venting hole is thickened (e.g., the venting guide wall that is seamlessly integrated with the body of the cap plate) may be manufactured.

However, the present disclosure is not limited to the method 1200 described above with reference to FIG. 12. For example, one or more processes of the method 1200 may be added/altered/deleted, the order of one or more processes may be changed, and/or one or more processes may be performed together (e.g., concurrently).

As an example, the first mold and the second mold may be the same mold. Each of the first mold and the second mold may be a mold including a recess and a through-hole in a central portion of the recess, the through-hole being smaller than the recess. In this case, the cap plate in which the venting guide wall is seamlessly integrated with the body of the cap plate may be manufactured by sequentially or concurrently (e.g., simultaneously or substantially simultaneously) performing the process S1220 described above of placing the cap plate raw material on one side of the mold and pressing the cap plate raw material and the process S1240 described above of forming the venting hole and the venting guide wall surrounding (e.g., around a periphery of) the venting hole using the punch die. Accordingly, the manufacturing process may be more simplified, and the manufacturing time may be further reduced.

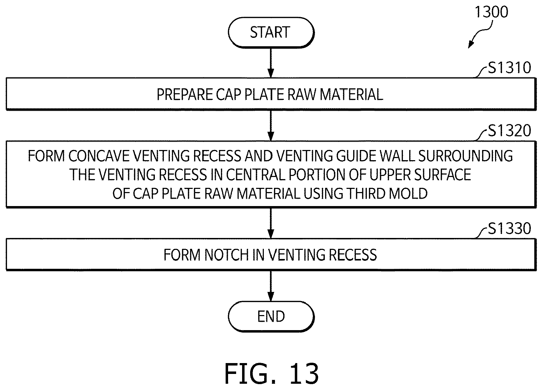

FIG. 13 illustrates a flowchart showing a method 1300 of manufacturing a cap plate of a rechargeable battery according to one or more embodiments of the present disclosure.

The method 1300 may start, and a cap plate raw material may be prepared (S1310). In some embodiments, the cap plate raw material may be a conductive metal (e.g., Al, an Al alloy, or steel coated with nickel (Ni)). Thereafter, the cap plate raw material may be disposed on one side of a first mold. The first mold may be a mold including a recess.

Thereafter, the cap plate raw material may be placed on one side of a third mold. The third mold may include a convex portion on a central portion, and may include a recess surrounding (e.g., around a periphery of) the convex portion. Subsequently, a concave venting recess and a venting guide wall surrounding (e.g., around a periphery of) the venting recess may be formed in a central portion of the upper surface of the cap plate raw material using the third mold (S1320). For example, the third mold may be a press mold, and a press apparatus may press the cap plate raw material using the third mold. As a result, the concave venting recess may be formed on the upper surface of a portion of the cap plate raw material pressed by the convex portion of the third mold. In addition, the venting guide wall surrounding (e.g., around a periphery of) the venting recess may be formed on the upper surface of the portion of the cap plate raw material pressed by the convex portion of the third mold.

In addition, a notch may be formed in the venting recess (S1330).

Accordingly, the cap plate including the concave venting recess, and in which the portion surrounding (e.g., around a periphery of) the venting recess is thickened, may be manufactured. In other words, the cap plate in which the venting recess and the venting guide wall surrounding (e.g., around a periphery of) the venting recess are seamlessly integrated with the body of the cap plate may be manufactured.

However, the present disclosure is not limited to the method 1300 described above with reference to FIG. 3. For example, one or more of the processes of the method 1300 described above may be added/altered/deleted, the order of one or more processes may be changed, and/or one or more processes may be performed concurrently or substantially simultaneously.

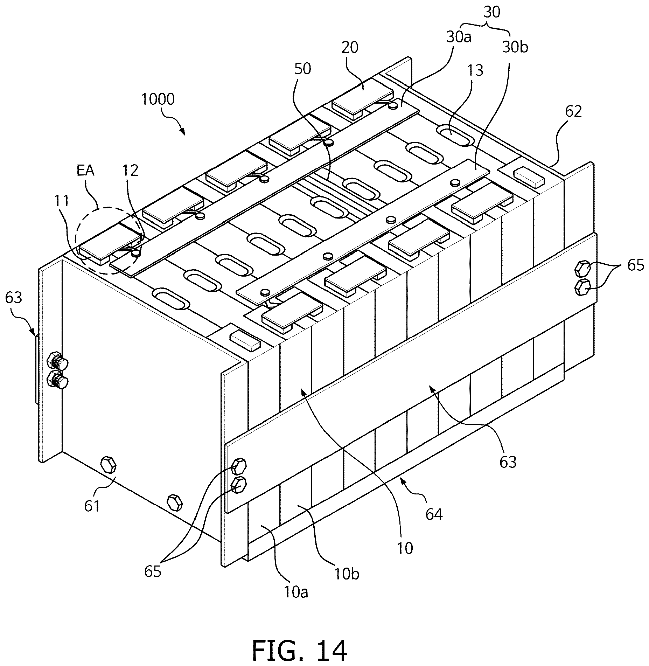

FIG. 14 illustrates a perspective view of an example of a battery module 1000 according to one or more embodiments of the present disclosure.

Referring to FIG. 14, the battery module 1000 according to one or more embodiments of the present disclosure includes terminal parts 11 and 12, a plurality of battery cells 10 arranged in one direction, a connection tab 20 connecting a battery cell 10a to an adjacent battery cell 10b, and a protection circuit module (e.g., a protection circuit) 30 having one end connected to the connection tab 20. The protection circuit module 30 may include a battery management system (BMS). Further, the connection tab 20 may include a body portion in contact with the electrode units 11 and 12 between the adjacent battery cells 10a and 10b, and an extension portion extending from the body portion and connected to the protection circuit module 30. The connection tab 20 may be, for example, a bus bar.

Each battery cell 10 may include a battery case, an electrode assembly received (e.g., accommodated) in the battery case, and an electrolyte. The electrode assembly and the electrolyte react electrochemically to store and release (e.g., generate) energy. The terminal parts 11 and 12 electrically connected to the connection tab 20, and a vent 13 as a discharge passage for gas generated inside the battery case, may be provided on one side of (e.g., an upper side of) the battery cell 10. The terminal parts 11 and 12 of the battery cell 10 may be a positive electrode terminal 11 and a negative electrode terminal 12 having different polarities from each other, and the terminal parts 11 and 12 of the adjacent battery cells 10a and 10b may be electrically connected to each other in series or in parallel by the connection tab 20 described in more detail below. Although a serial connection is illustrated and described as an example, the connection structure is not limited thereto, and various connection structures may be employed as desired or necessary. In addition, the number and arrangement of battery cells is not limited to the structure shown in FIG. 14, and may be variously modified as desired or necessary. In some embodiments, the battery module 1000 may include one or more battery cells (e.g., the battery cells, each including the cap assembly of FIG. 2), each including the venting guide wall according to one or more embodiments of the present disclosure.

The plurality of battery cells 10 may be arranged in (e.g., may be stacked in) one direction, so that the wide surfaces of the battery cells 10 face each other, and the plurality of battery cells 10 may be fixed by the housings 61, 62, 63, and 64. The housings 61, 62, 63, and 64 may include a pair of end plates 61 and 62 facing the wide surfaces of the battery cell 10, and a side plate 63 and a bottom plate 64 connecting the pair of end plates 61 and 62 to each other. The side plate 63 may support side surfaces of the battery cells 10, and the bottom plate 64 may support bottom surfaces of the battery cells 10. In addition, the pair of end plates 61 and 62, the side plate 63, and the bottom plate 64 may be connected by bolts 65 and/or any other suitable fastening members and methods known to those of ordinary skill in the art.

The protection circuit module 30 may have electronic components and protection circuits mounted thereon, and may be electrically connected to connection tabs 20 described in more detail below. The protection circuit module 30 includes a first protection circuit module (e.g., a first protection circuit) 30a and a second protection circuit module (e.g., a second protection circuit) 30b extending along the direction in which the plurality of battery cells 100 are arranged in different locations. The first protection circuit module 30a and the second protection circuit module 30b may be spaced from each other at a suitable interval (e.g., a predetermined interval), and arranged parallel to each other to be electrically connected to adjacent connection tabs 20, respectively. For example, the first protection circuit module 30a extends on one side of the upper portion of the plurality of battery cells 10 along the direction in which the plurality of battery cells 10 are arranged, and the second protection circuit module 30b extends to the other upper side of the plurality of battery cells 10 along the direction in which the plurality of battery cells 10 are arranged. The second protection circuit module 30b may be spaced from the first protection circuit module 30a at a suitable interval (e.g., a predetermined interval) with the vents 34 interposed therebetween, but may be disposed parallel to the first protection circuit module 30a. As such, the two protection circuit modules are spaced from each other side-by-side along the direction in which the plurality of battery cells 10 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b, so that the two protection circuit modules 30a and 30b may be electrically connected with each other.

The connection may be performed by any one of soldering, resistance welding, laser welding, projection welding, and/or any other suitable connection methods known to those of ordinary skill in the art.

In addition, the connection member 50 may be, for example, an electric wire. In addition, the connection member 50 may be made of a material having an elasticity or flexibility. By the connecting member 50, it may be possible to check and manage whether the voltage, temperature, and/or current of the plurality of battery cells 10 are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 50.

In addition, when the battery cell 10 swells, shock may be absorbed by the elasticity or flexibility of the connection member 50, thereby preventing or substantially preventing the first and second protection circuit modules 30a and 30b from being damaged.

In addition, the shape and the structure of the connection member 50 is not limited to the shape and the structure shown in FIG. 8.

As described above, because the protection circuit module 30 is provided as the first and second protection circuit modules 30a and 30b, the area of the PCB constituting the protection circuit module can be reduced or minimized, and the space inside the battery module can be secured, which may improve work efficiency by facilitating a fastening work for connecting the connection tab 20 and the protection circuit module 30 and repair work if (or when) an abnormality is detected in the battery module.

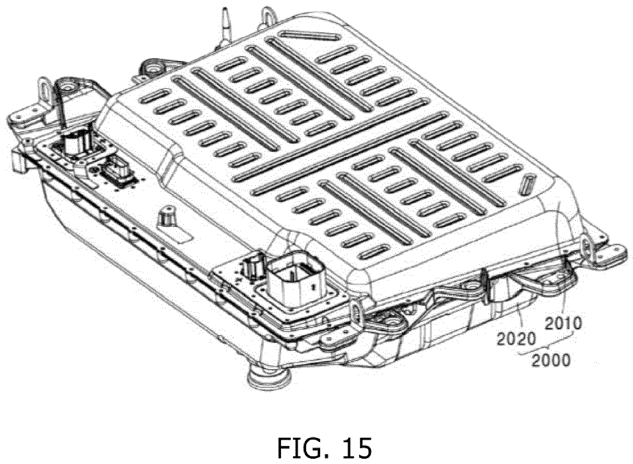

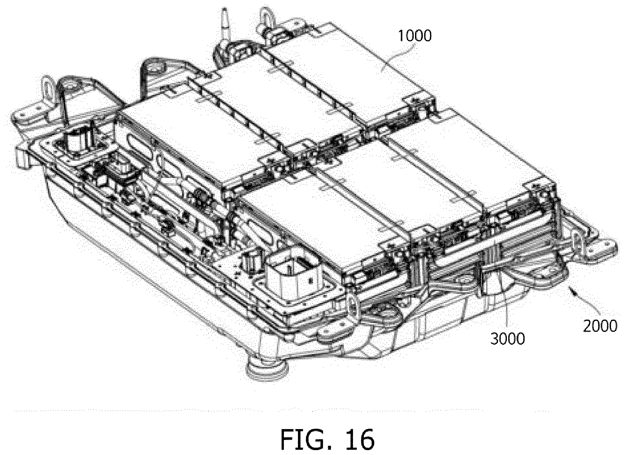

FIGS. 15 and 16 illustrate perspective views of examples of a battery pack according to one or more embodiments of the present disclosure. The battery pack may include a plurality of battery modules 1000, and a housing 2000 for accommodating the plurality of battery modules 1000. For example, the housing 2000 may include first and second housings 2010 and 2020 coupled in opposite directions through the plurality of battery modules 1000. In some embodiments, the battery pack may include one or more battery cells (e.g., the battery cells, each including the cap assembly of FIG. 2), each including the venting guide wall according to one or more embodiments of the present disclosure. The plurality of battery modules 1000 may be electrically connected to each other by using a bus bar 3000, and the plurality of battery modules 1000 may be electrically connected to each other in a series/parallel or series-parallel mixed method, thereby obtaining a desired (e.g., a required) electrical output.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### DESCRIPTION OF SOME REFERENCE SYMBOLS

10: secondary battery
100: cap assembly
200: case

## Claims

1. A rechargeable battery (10) comprising:
an electrode assembly comprising an electrode;
a case (200) configured to accommodate the electrode assembly;
a cap plate (110, 800) configured to seal an open area of the case (200); and
one or more terminals (120) electrically connected to the electrode, and coupled to the cap plate (110),
wherein the cap plate (110) comprises:
a vent (112, 812) configured to expel gas generated from inside a cell outward; and
a venting guide wall (114, 814) surrounding the vent, and protruding outward from a surface of the cap plate (110, 800) at a peripheral portion of the vent (112, 812).

2. The rechargeable battery as claimed in claim 1, wherein the venting guide wall (114, 814) is integrated with the cap plate (110, 800).

3. The rechargeable battery (10) as claimed in claim 1 or claim 2, wherein a height from a lower surface of the cap plate (110, 800) to an upper surface of the venting guide wall (114, 814) is higher than a thickness of any portion of the cap plate (110, 800) excluding the venting guide wall (114, 814).

4. The rechargeable battery (10) as claimed in any one of the preceding claims, wherein the vent (112) has a venting hole (112) as a through-hole, and
wherein the venting guide wall (114) surrounds the venting hole (112).

5. The rechargeable battery (10) as claimed in any one of claims 1 to 3, wherein the vent (812) has a concave venting recess (812), and
wherein the venting guide wall (814) surrounds the concave venting recess (812) .

6. The rechargeable battery (10) as claimed in claim 5, wherein a height from a lower surface of the cap plate (800) to an upper surface of the concave venting recess (812) is lower than a thickness of any portion of the cap plate (800) excluding the concave venting recess (812).

7. The rechargeable battery (10) as claimed in claim 5 or claim 6, wherein the concave venting recess (812) comprises a notch (816) configured to rupture at least a portion of the concave venting recess (812) if a thermal event occurs.

8. The rechargeable battery (10) as claimed in any one of claims 5 to 7,
wherein the venting guide wall (814) and the concave venting recess (812) are integrated with the cap plate (800).

9. The rechargeable battery (10) as claimed in any one of the preceding claims, wherein a height from a lower surface of the cap plate (110, 800) to an upper surface of the venting guide wall (114, 814) is lower than a height from a lower surface of the cap plate (110, 800) to an upper surface of each of the one or more terminals (120).

10. A method of manufacturing a cap plate of a rechargeable battery, comprising:
molding a cap plate raw material (512) using a first mold (514) having a recess (516) to form a convex portion (524) on an upper surface of the cap plate raw material (512);
placing the molded cap plate raw material (522) on one side of a second mold (532) having a through-hole (534) smaller than the convex portion (524), so that the through-hole (534) of the second mold (532) overlaps with a central portion of the convex portion (524); and
forming a venting hole (112) and a venting guide wall (114) surrounding the venting hole (112) in the convex portion (524) by applying pressure in a direction from a position of the molded cap plate raw material (522) to the through-hole (534) of the second mold (532) using a punch die (542) smaller than the convex portion (524).

11. The method as claimed in claim 10, wherein the first mold (514) and the second mold (532) are same molds, the second mold (532) has a recess (516), and the through-hole (534) of the second mold (532) is a through-hole smaller than the recess (516) and located at a central portion of the recess (516).

12. The method of claim 10 or claim 11, wherein the rechargeable battery is in accordance with any one of claims 1 to 9.
